# EUROPEAN PATENT SPECIFICATION

(11) **EP 0 428 684 B1**
(45) Date of publication and mention of the grant of the patent: **28.08.1996**
(21) Application number: 90908897.3
(22) Date of filing: 30.05.1990
(51) Int. Cl.: B29C 45/00, B29C 45/16, B29C 45/36, B29C 45/14

(54) **INJECTION-MOLDING DIMENSION-CONTROL AND CLAMP-REDUCTION**
STEUERUNG DER FORMTEILABMESSUNGEN UND SCHLIESSKRAFTREDUKTION BEIM SPRITZGIESSEN
COMMANDE DES DIMENSIONS D'UN PRODUIT MOULE PAR INJECTION ET REDUCTION DES FORCES DE SEPARATION

(30) Priority: 05.06.1989 US 361275
(43) Date of publication of application: 29.05.1991
(60) Divisional application: 95105605.0
(73) Proprietor: SORENSEN, Jens Ole, CAYMAN ISLANDS (KY)
(72) Inventor: SORENSEN, Jens Ole, CAYMAN ISLANDS (KY)
(74) Representative: Wilson, Nicholas Martin
(86) International application number: PCT/US90/02982
(87) International publication number: WO 90/14936

(56) References cited:
- EP-A- 0 057 547
- EP-A- 0 100 603
- WO-A-88/05376
- WO-A-88/05404
- WO-A-90/09878
- DE-A- 1 816 466
- DE-A- 2 046 958
- GB-A- 2 138 736
- US-A- 3 878 282
- US-A- 3 995 008
- US-A- 4 140 828
- US-A- 4 264 295
- US-A- 4 307 137
- US-A- 4 867 672
- PATENT ABSTRACTS OF JAPAN vol. 9, no. 209 (M-407)(1932) 27 August 1985 & JP-A-60 071 217 (TOUYOU SEIKAN K.K.) 23 April 1985

## Description

### BACKGROUND OF THE INVENTION

The present invention generally pertains to injection molding of plastic products and is particularly directed to improvement in methods of controlling the wall thickness of a plastic product while heing injection molded and improvement in methods of reducing the clamping force requirements of a plastic product while heing injection molded.

Prior art methods for controlling the wall thickness of a plastic product while heing injection molded and for reducing the clamping force requirements of a plastic product while heing injection molded are described in U.S. Patent No. 3,375,554 to Blumer, U.S. Patent No. 3,737,272 to Segmuller, U.S. Patent No. 3,995,007 to Spiegelberg, U.S. Patent No. 4,264,295 to Hingley, and U.S. Patents Nos. 4,381,275, 4,467,994, 4,508,676 and 4,789,326 all to Sorensen.

In WO88/05376 there is disclosed a mold for injection molding and controlling the dimensions of a hollow plastic product. One of the old parts includes a retractable portion whereby, when the retractable portion is protracted, initially injected molten plastic create stabilizing regions of stiffened plastic which impede lateral deflection of the mold parts with respect to each other when additional molten plastic subsequently is injected. The retractable portion is then retracted so that subsequently injected molten plastic can be directed between the stabilizing regions of stiffened plastic and into side-wall-defining regions of the mold cavity.

### SUMMARY OF THE INVENTION

The present invention provides a method of inject ion molding a hollow thin-walled plastic product by utilizing a mold having a first section and a second section defining a mold cavity therebetween, comprising the steps of:
(a) providing a first injection of a plastic material into the mold cavity; and
(b) cooling the plastic material of the first injection in the mold cavity;
   characterized by:
   step (b) comprising the step of cooling one portion of the plastic material of the first injection so that it is at least partially solidified and so that another portion of the plastic material of the first injection remains fluid;
(c) providing subsequent to the first injection of plastic material, a second injection of a plastic material into the mold cavity without intermission from the first injection of plastic material when the cooled plastic material of the first injection is sufficiently solidified, the plastic material of the second injection displacing some of the fluid plastic material of the first injection to thereby provide at least one flow path of the plastic material of the second injection to continue filling the mold cavity and so that some of the at least partially solidified plastic material of the first injection stabilizes the first section in relation to the second section by impeding movement of the first section in relation to the second section caused by the second injection of plastic material; and
(d) cooling the injected plastic material in the mold cavity to thereby solidify the moulded product.
   Preferably, the mold cavity includes a base region and flow channels extending from the base region through a region of the cavity that defines the side walls of the product, the method being further characterized by the step of:
   (i) forming said mold cavity in which within a portion of the mold cavity, the quotient of a ratio of flow channel length to distance between flow channels divided by the square of a ratio of flow channel thickness to wall thickness in a thin-cavity region between flow channels is less than two.

   In one preferred arrangement, the mold cavity includes a base region and a region defining side walls of the product, the method being further characterized by:
   providing said partially solidified portion of the plastic material of the first injection so that it at least partially extends over said base region of the mold cavity whereby said at least partially solidified plastic material of the first injection impedes transmission of injection pressure caused by the second injection of plastic material to thereby reduce the clamping force required to overcome forces that tend to separate the first (12) and second mold sections as a result of injection pressure.
   Contrary to the prior art mentioned under the title "Background of the Invention" above, these methods may be executed without the help of retractable portions of the mold sections, multiple gates, temporary cavity-section-to-free-end-of-core-section contact, throttles, valves or reduced throats, and without the use of complementary shaped formations, but that is not to imply that the present invention cannot be executed in combination with one or more of such features.
   Preferably, the first mold section and the second mold section are separated by a parting line, the method characterized by
   step (a) comprising the step of:
(e) providing the first injection of plastic material so that the plastic material of the first injection does not completely cover the parting line; and,
   step (c) comprising the step of:
(f) providing the second injection of plastic material so that the plastic material of the second injection fills the mold cavity to thereby completely cover the parting line.

The methods of the present invention are particularly well suited for injection molding of products with laminated walls. In such cases the mold cavity may contain a first injected plastic product which was injected in a previous injection cycle, so that the injection of first and second plastics according to the invention provides a plastic material coating of the first injected plastic product.

The present invention also provides a method of controlling the dimensions of a hollow plastic product having laminated walls injection molded within the cavity of a mold having a core section and a cavity section defining the mold cavity therebetween and separated by a parting line, comprising stabilizing the core section in relation to the cavity section and providing in advance an early layer of the laminated plastic product encased in the mold cavity.

Additional features of the present invention specified in the claims and are described in relation to the description of the preferred embodiments.

### BRIEF DESCRIPTION OF THE DRAWING

Figure 1 is a sectional view of a mold used to execute one preferred embodiment of the method of the present invention.

Figure 2 is a sectional view of the mold shown in Figure 1 taken along lines 2-2.

Figure 3 is a sectional view of the mold shown in Figure 1 taken along lines 3-3.

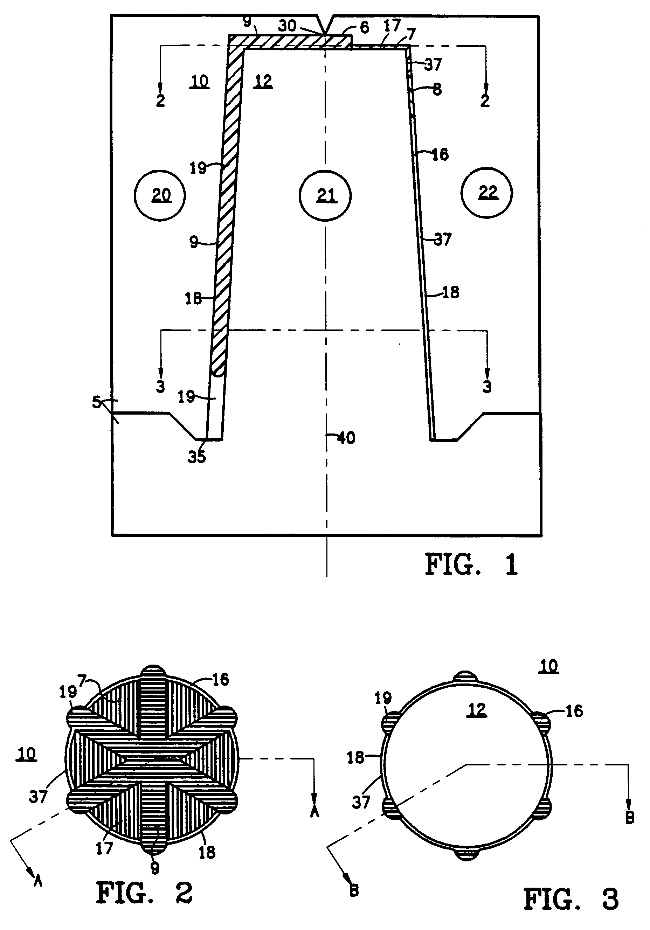

The sectional view of Figure 1 is taken along lines A-A of Figure 2 and along lines B-B of Figure 3.

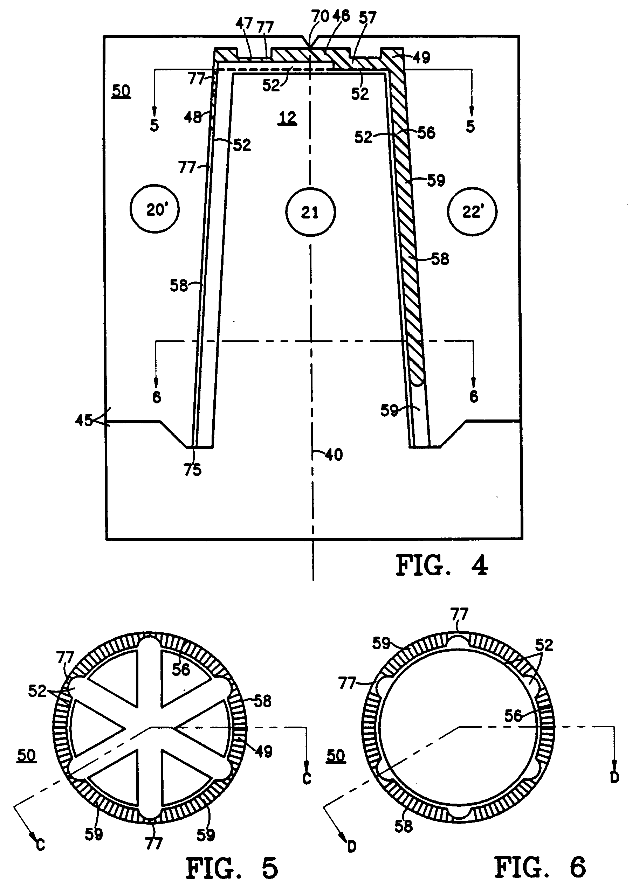

Figure 4 is a sectional view of a mold used to execute a preferred embodiment of the method of the present invention for molding a hollow plastic product with laminated walls.

Figure 5 is a sectional view of the mold shown in Figure 4 taken along lines 5-5.

Figure 6 is a sectional view of the mold shown in Figure 4 taken along lines 6-6.

The sectional view of Figure 4 is taken along lines C-C of Figure 5 and along lines D-D of Figure 6.

The product wall thickness shown in the Drawing are increased in order to better show the invention. The actual wall thicknesses are normally much smaller, and depend on the type of plastic material, the temperature of the plastic material, the mold temperature, the thermal conductivity of the mold wall material, the flow distances, the injection pressure, and other molding parameters.

### DESCRIPTION OF THE PREFERRED EMBODIMENTS

Referring to Figures 1, 2 and 3, the preferred embodiment of the invention utilizes a mold 5 with a cavity mold section 10 and a core mold section 12, shown in its assembled arrangement. The mold 5 defines a mold cavity 16 for forming a plastic product having perimetric side walls, not shown in its fully molded outline. The mold cavity 16 includes a base region 17, a side-wall-defining region 18 and flow channels 19 extending from the base region 17 through the side-wall-defining region 18.

Cooling means 20, 21 and 22 are used to cool both the first and second injected plastic material. Molten plastic material may be injected into the mold cavity 16 via a gate 30 located in the center of the base region 17 of the mold cavity 16. The cavity section 10 and the core section 12 are separated by a parting line 35. The mold cavity 16 may be opened along axis 40 for ejection of a molded product.

The methods of the preferred embodiment are executed as follows. A first plastic material 6, 7, 8, 9 is injected into the mold cavity 16 so that only a part of the mold cavity 16 is filled, a second plastic material is injected without intermission. The first plastic material has the same chemical composition as the second plastic material.

A portion of the first plastic material 7 cools in the thin cavity region 37 between flow channels 19 before the second plastic material is injected so that it is at least partially solidified and so that another portion of the first plastic material 6, 8, 9 remains fluid.

The at least partially solidified portion of the first plastic cools very fast before a second plastic material is injected, because the wall thickness of the thin-cavity region 37 is very thin. Another portion of the first plastic material 6, 8, 9 remains fluid because the wall thickness of the flow channels 19 is relatively thick.

Subsequent to injecting the first plastic material 6, 7, 8, 9, a second plastic material is injected into the mold cavity via the gate 30. The second plastic material displaces some of the fluid first plastic material in the flow channels 19, and thereby induces a number of flow paths 9 for the second plastic to fill the mold cavity 16.

Some of the at least partially solidified first plastic material 7 in the thin cavity regions 37 is sufficiently solidified to stabilize and support the core section 12 in relation to the cavity section 10 by impeding movement caused by injecting the second plastic material.

Some of the at least partially solidified first plastic material 7 in the thin cavity regions 37 is also sufficiently solidified to impede transmission of injection pressure in the first plastic material 7, caused by injecting the second plastic material which effect separative forces of the core mold section 12 in relation to the cavity mold section 10. The injected plastic material is then cooled to completely solidify the product.

The first plastic material is injected so that is does not completely cover the parting line 35 and fill the mold cavity 16, and the second plastic material is injected so that it completely covers the parting line and fills the mold cavity 16.

An example is as follows, the thin product wall thickness in the thin cavity regions 37 being 0.15 mm, the thick product wall thickness of the flow channels 19 being 0.6mm, the plastic material being polypropylene or polystyrene at a temperature of 300 degrees C, the mold temperature being 10 degrees C, the thermal conductivity of the mold being that of steel, the flow distance through the side-wall defining region 18 of the flow channels 19 being about 150mm, the distance between flow channels 19 being about 5 mm, and the injection pressure being 2000 Bar.

Referring to Figures 4, 5 and 6, the preferred embodiment of the invention used when molding a hollow plastic product with laminated walls utilizes a mold 45 with a cavity mold section 50 and a core mold section 12, shown in its assembled arrangement. The mold 45 defines a mold cavity 56 for forming a plastic product having laminated perimetric side walls, not shown in its fully molded outline. An early layer 52 of the laminated plastic product is encased on the core section 12 in the mold cavity 56. The early layer 52 was formed in accordance with the embodiment of the invention described with reference to Figures 1, 2 and 3.

The mold cavity 56 includes a base region 57, a side-wall-defining region 58 and flow channels 59 extending from the base region 57 through the side-wall-defining region 58.

Cooling means 20', 21 and 22' are used to cool both the first and second injected plastic material. Molten plastic material may be injected into the mold cavity 56 via a gate 70 located in the center of the base region 57 of the mold cavity 56. The cavity section 50 and the core section 12 are separated by a parting line 75. The mold cavity 56 may be opened along axis 40 for ejection of a molded product.

The methods of this preferred embodiment are executed as follows. A first plastic material 46, 47, 48, 49 is injected into the mold cavity 56 so that only a part of the mold cavity 56 is filled, a second plastic material is injected without intermission. The first plastic material has the same chemical composition as the second plastic material. Only a region of the early layer 52 is coated with the first plastic material 46, 47,48, 49, as shown in Figure 4.

A portion of the first plastic material 47 cools in the thin cavity region 77 between flow channels 59 before the second plastic material is injected so that it is at least partially solidified and so that another portion of the first plastic material 46, 48, 49 remains fluid.

The at least partially solidified portion of the first plastic cools very fast before a second plastic material is injected, because the wall thickness of the thin-cavity region 77 is very thin. Another portion of the first plastic material 46, 48, 49 remains fluid because the wall thickness of the flow channels 59 is relatively thick.

Subsequent to injecting the first plastic material 46, 47, 48, 49, a second plastic material is injected into the mold cavity via the gate 70. The second plastic material displaces some of the fluid first plastic material in the flow channels 59, and thereby induces a number of flow paths 49 for the second plastic to fill the mold cavity 56, and further coat the early layer 52.

Some of the at least partially solidified first plastic material 47 in the thin cavity regions 77 is sufficiently solidified to combine with a sufficiently solidified portion of the early layer 52 to stabilize and support the core section 12 in relation to the cavity section 50 by impeding movement caused by injecting the second plastic material.

Some of the at least partially solidified first plastic material 47 in the thin cavity regions 77 is also sufficiently solidified to combine with a sufficiently solidified portion of the early layer 52 to impede transmission of injection pressure in the first plastic material 47, caused by injecting the second plastic material which effect separative forces of the core mold section 12 in relation to the cavity mold section 50. The injected plastic material is then cooled to completely solidify the product.

The first plastic material is injected so that is does not completely cover the parting line 75 and fill the mold cavity 56, and the second plastic material is injected so that it completely covers the parting line and fills the mold cavity 56.

In the particular preferred embodiments of the invention described herein, contrary to certain prior art methods of core steering, no retractable portion of the core section and/or the cavity section is protracted to contact the other mold section to stabilize the core section in relation to the cavity section during the continuous injection of the plastic material; the configuration of the mold cavity as defined by the mold sections is maintained without change during the continuous injection of plastic material; the mold cavity is formed by combining mold sections that define a mold cavity that does not include any throttle between the base region and the side wall defining region; and no use is made of multiple gates, in order to create one or more flow path for the second plastic material to fill the mold cavity.

In other preferred embodiments of the present invention the first plastic material is injected into the mold cavity via more than one gate and the second plastic material is injected into the mold cavity via the same gates.

When the method of the invention is used only for reducing the required clamping force for the product and not for steering the core section, the method of the invention may be executed in molds which do not have a core section and a cavity section.

## Claims

1. A method of injection molding a hollow thin-walled plastic product by utilizing a mold having a first section (12) and a second section (10,50) defining a mold cavity (16,56) therebetween, comprising the steps of:
(a) providing a first injection of a plastic material (6,7,8,9,46,47,48,49) into the mold cavity; and
(b) cooling the plastic material of the first injection in the mold cavity;
characterized by:
step (b) comprising the step of cooling one portion of the plastic material (7,47) of the first injection so that it is at least partially solidified and so that another portion of the plastic material (6,8,9,46,48,49) of the first injection remains fluid;
(c) providing subsequent to the first injection of plastic material, a second injection of a plastic material into the mold cavity without intermission from the first injection of plastic material when the cooled plastic material of the first injection is sufficiently solidified, the plastic material of the second injection displacing some of the fluid plastic material (6,8,9,46,48,49) of the first injection to thereby provide at least one flow path of the plastic material of the second injection to continue filling the mold cavity (16,56) and so that some of the at least partially solidified plastic material (7,47) of the first injection stabilizes the first section (12) in relation to the second section (10,50) by impeding movement of the first section (12) in relation to the second section (10,50) caused by the second injection of plastic material; and
(d) cooling the injected plastic material in the mold cavity to thereby solidify the moulded product.

2. A method according to claim 1, wherein said mold cavity (16,56) includes a base region (17,57) and flow channels (19,59) extending from the base region through a region (18,58) of the cavity that defines the side walls of the product, the method being further characterised by the step of:
(i) forming said mold cavity in which within a portion of the mold cavity, the quotient of a ratio of flow channel length to distance between flow channels divided by the square of a ratio of flow channel thickness to wall thickness in a thin-cavity region between flow channels is less than two.

3. A method of injection molding a hollow thin-walled plastic product according to claim 1 or 2, said mold cavity (16,56) including a base region (17,57) and a region (18,58) defining side walls of the product, the method being further characterized by:
providing said partially solidified portion of the plastic material (7,47) of the first injection so that it at least partially extends over said base region of the mold cavity whereby said at least partially solidified plastic material (7,47) of the first injection impedes transmission of injection pressure caused by the second injection of plastic material to thereby reduce the clamping force required to overcome forces that tend to separate the first (12) and second mold sections (10,50) as a result of injection pressure.

4. A method according to claim 1, 2 or 3, wherein the first mold section (12) and the second mold section (10,50) are separated by a parting line (35,75), the method characterized by
step (a) comprising the step of:
(e) providing the first injection of plastic material so that the plastic material of the first injection (6,7,8,9,46,47,48,49) does not completely cover the parting line; and,
step (c) comprising the step of:
(f) providing the second injection of plastic material so that the plastic material of the second injection fills the mold cavity (16,56) to thereby completely cover the parting line.

5. A method according to claim 1, 2 or 3, characterized by step (b) comprising the steps of:
(g) cooling said one portion of the plastic material (7,47) of the first injection so that it is at least partially solidified by molding said portion in a relatively thin wall thickness (37,77); and;
(h) cooling said other portion of the plastic material (6,8,9,46,48,49) of the first injection so that said other portion of the plastic material of the first injection remains fluid by molding said other portion in a relatively thick wall thickness (19,59).

6. A method according to claim 1, 2 or 3, characterized in that the plastic material (6,7,8,9,46,47,48,49) of the first injection has the same chemical composition as the plastic material of the second injection.

7. A method according to claim 1, 2 or 3, characterized in that the plastic material (6,7,8,9,46,47,48,49) of the first injection is injected into the mold cavity (16,56) via at least one gate (30,70), and wherein the plastic material of the second injection is injected into the mold cavity via the same at least one gate.

8. A method according to claim 1, 2 or 3, characterized in that a single gate is used to create at least one flow path for the plastic material of the second injection to continue filling the mold cavity (16,56).

9. A method according to claim 1, 2 or 3, characterized in that the injection molded hollow plastic product has laminated walls, and the mold cavity (56) contains a previously injected plastic product when plastic material of the first and second injections is injected so that one said wall includes the previously injected plastic product.

## Patentansprüche

1. Verfahren zum Spritzgießen eines hohlen, dünnwandigen Kunststofferzeugnisses durch Verwendung einer Form mit einem ersten Segment (12) und einem zweiten Segment (10, 50), die zwischen sich einen Formhohlraum (16, 56) bilden, mit den Schritten:
(a) Durchführen einer ersten Einspritzung eines Kunststoffmaterials (6, 7, 8, 9, 46, 47, 48, 49) in den Formhohlraum; und
(b) Kühlen des Kunststoffmaterials der ersten Einspritzung in dem Formhohlraum;
gekennzeichnet durch:
den in dem Schritt (b) enthaltenen Schritt der Kühlung eines Teils des Kunststoffmaterials (7, 47) der ersten Einspritzung, so daß es wenigstens teilweise erstarrt und daß ein anderer Teil des Kunststoffmaterials (6, 8, 9, 46, 48, 49) der ersten Einspritzung flüssig bleibt;
(c) Durchführen einer auf die erste Einspritzung von Kunststoffmaterial folgenden zweiten Einspritzung von Kunststoffmaterial in den Formhohlraum ohne Unterbrechung gegenüber der ersten Einspritzung von Kunststoffmaterial, wenn das gekühlte Kunststoffmaterial der ersten Einspritzung genügend erstarrt ist, wobei das Kunststoffmaterial der zweiten Einspritzung einen Teil des flüssigen Kunststoffmaterials (6, 8, 9, 46, 48, 49) der ersten Einspritzung verdrängt, um dadurch wenigstens einen Fließweg für das Kunststoffmaterial der zweiten Einspritzung zum fortgesetzten Füllen des Formhohlraums (16, 56) zu bilden, und so daß ein Teil des wenigstens teilweise erstarrten Kunststoffmaterials (7, 47) aus der ersten Einspritzung das erste Segment (12) in bezug auf das zweite Segment (10, 50) stabilisiert, indem es der durch die zweite Einspritzung von Kunststoffmaterial verursachten Bewegung des ersten Segments (12) relativ zu dem zweiten Segment (10, 50) entgegenwirkt; und
(d) Kühlen des in den Formhohlraum eingespritzten Kunststoffmaterials, um dadurch das Formteil erstarren zu lassen.

2. Verfahren nach Anspruch 1, bei dem der Formhohlraum (16, 56) einen Basisbereich (17, 57) und Strömungskanäle (19, 59) aufweist, die sich von dem Basisbereich aus durch einen Bereich (18, 58) des Hohlraums erstrecken, der die Seitenwände des Erzeugnisses definiert, wobei das Verfahren weiterhin gekennzeichnet ist durch den Schritt der:
(i) Bildung des Formhohlraums, in dem innerhalb eines Teils des Formhohlraums der Quotient aus einem Verhältnis zwischen der Strömungskanal-Länge und dem Abstand zwischen Strömungskanälen dividiert durch das Quadrat eines Verhältnisses zwischen der Strömungskanal-Dicke und der Wanddicke in einem dünnen Hohlraumbereich zwischen Strömungskanälen kleiner ist als zwei.

3. Verfahren zum Spritzgießen eines hohlen, dünnwandigen Kunststofferzeugnisses nach Anspruch 1 oder 2, wobei der Formhohlraum (16, 56) einen Basisbereich (17, 57) und einen Seitenwände des Produkts definierenden Bereich (18, 58) aufweist, wobei das Verfahren weiterhin gekennzeichnet ist durch:
Herstellen des teilweise erstarrten Teils des Kunststoffmaterials (7, 49) aus der ersten Einspritzung derart, daß er sich wenigstens teilweise über den Basisbereich des Formhohlraums erstreckt, wodurch dieses wenigstens teilweise erstarrte Kunststoffmaterial (7, 47) aus der ersten Einspritzung der Übertragung des durch die zweite Einspritzung von Kunststoffmaterial verursachten Einspritzdruckes entgegenwirkt und dadurch die Schließkraft reduziert, die erforderlich ist, um Kräfte zu überwinden, die die Tendenz haben, die ersten (12) und zweiten Formsegmente (10, 50) infolge des Einspritzdruckes voneinander zu trennen.

4. Verfahren nach Anspruch 1, 2 oder 3, bei dem das erste Formsegment (12) und das zweite Formsegment (10, 50) durch eine Teilungslinie (35, 75) getrennt sind, das Verfahren dadurch gekennzeichnet, daß
der Schritt (a) den Schritt aufweist:
(e) Durchführen der ersten Einspritzung von Kunststoffmaterial derart, daß das Kunststoffmaterial der ersten Einspritzung (6, 7, 8, 9, 46, 47, 48, 49) die Teilungslinie nicht vollständig bedeckt; und
der Schritt (c) den Schritt aufweist:
(f) Durchführen der zweiten Einspritzung von Kunststoffmaterial derart, daß das Kunststoffmaterial der zweiten Einspritzung den Formhohlraum (16, 56) füllt und dadurch die Teilungslinie vollständig bedeckt.

5. Verfahren nach Anspruch 1, 2 oder 3, dadurch gekennzeichnet, daß der Schritt (b) die Schritte aufweist:
(g) Kühlen des einen Teils des Kunststoffmaterials (7, 47) aus der ersten Einspritzung, so daß es mindestens teilweise erstarrt, durch Formen dieses Teils in einer relativ dünnen Wanddicke (37, 77); und
(h) Kühlen des anderen Teils des Kunststoffmaterials (6, 8, 9, 46, 48, 49) aus der ersten Einspritzung, so daß dieser andere Teil des Kunststoffmaterials aus der ersten Einspritzung flüssig bleibt, durch Formen dieses anderen Teils in einer relativ dicken Wanddicke (19, 59).

6. Verfahren nach Anspruch 1, 2 oder 3, dadurch gekennzeichnet, daß das Kunststoffmaterial (6, 7, 8, 9, 46, 47, 48, 49) aus der ersten Einspritzung dieselbe chemische zusammensetzung wie das Kunststoffmaterial der zweiten Einspritzung hat.

7. Verfahren nach Anspruch 1, 2 oder 3, dadurch gekennzeichnet, daß das Kunststoffmaterial (6, 7, 8, 9, 46, 47, 48, 49) aus der ersten Einspritzung über wenigstens einen Einlauf (30, 70) in den Formhohlraum (16, 56) eingespritzt wird, und daß das Kunststoffmaterial der zweiten Einspritzung über denselben wenigstens einen Einlauf in den Formhohlraum eingespritzt wird.

8. Verfahren nach Anspruch 1, 2 oder 3, dadurch gekennzeichnet, daß ein einziger Einlauf zur Erzeugung wenigstens eines Fließweges für das Kunststoffmaterial der zweiten Einspritzung zum fortgesetzten Füllen des Formhohlraums (16, 56) verwendet wird.

9. Verfahren nach Anspruch 1, 2 oder 3, dadurch gekennzeichnet, daß das durch Spritzgießen hergestellte hohle Kunststofferzeugnis geschichtete Wände aufweist und der Formhohlraum (56) ein zuvor gespritztes Kunststofferzeugnis enthält, wenn Kunststoffmaterial der ersten und zweiten Einspritzungen eingespritzt wird, so daß die eine Wand das zuvor gespritzte Kunststofferzeugnis einschließt.

## Revendications

1. Procédé de moulage par injection d'un produit de matière plastique creux à parois minces, en utilisant un moule comportant une première section (12) et une seconde section (10, 50) définissant entre elles une cavité de moule (16, 56), comprenant les étapes consistant à :
(a) produire une première injection d'une matière plastique (6, 7, 8, 9, 46, 47, 48, 49) dans la cavité de moule ; et
(b) refroidir la matière plastique de la première injection dans la cavité de moule ;
caractérisé en ce que :
l'étape (b) comprend l'étape de refroidissement d'une partie de la matière plastique (7, 47) de la première injection de façon qu'elle se solidifie au moins partiellement et que l'autre partie de la matière plastique (6, 8, 9, 46, 48, 49) de la première injection reste fluide ;
(c) on produit, après la première injection de matière plastique, une seconde injection de matière plastique dans la cavité de moule sans interruption par rapport à la première injection de matière plastique, lorsque la matière plastique refroidie de la première injection est suffisamment solidifiée, la matière plastique de la seconde injection déplaçant une certaine quantité de la matière plastique fluide (6, 8, 9, 46, 48, 49) de la première injection pour produire ainsi au moins un chemin d'écoulement de la matière plastique de la seconde injection afin qu'elle continue de remplir la cavité de moule (16, 56), et de façon qu'une certaine quantité de la matière plastique au moins partiellement solidifiée (7,,47) de la première injection, stabilise la première section (12) par rapport à la seconde section (10, 50) en empêchant le mouvement de la première section (12) par rapport à la seconde section (10, 50), ce mouvement étant provoqué par la seconde injection de matière plastique ; et
(d) on refroidit la matière plastique injectée dans la cavité de moule pour solidifier ainsi le produit moulé.

2. Procédé selon la revendication 1, dans lequel la cavité de moule (16, 56) comprend une zone de base (17, 57) et des canaux d'écoulement (19, 59) partant de la zone de base et passant à travers une zone (18, 58) de la cavité qui définit les parois latérales du produit,
ce procédé étant en outre caractérisé en ce que
(i) on forme la cavité de moule dans laquelle, l'intérieur d'une partie de la cavité de moule, le quotient obtenu en divisant le rapport de la longueur des canaux d'écoulement à la distance entre ces canaux d'écoulement, par le carré du rapport de l'épaisseur des canaux d'écoulement à l'épaisseur de paroi dans une zone de cavité mince entre canaux d'écoulement, est inférieur à deux.

3. Procédé de moulage par injection d'un produit de matière plastique creux à parois minces, selon la revendication 1 ou 2, la cavité de moule (16, 56) comprenant une zone de base (17, 57) et une zone (18, 58) définissant les parois latérales du produit,
le procédé étant en outre caractérisé en ce que :
la formation de la partie partiellement solidifiée de la matière plastique (7, 47) de la première injection de façon qu'elle s'étende au moins partiellement sur la zone de base de la cavité de moule pour que cette matière plastique au moins partiellement solidifiée (7, 47) de la première injection empêche la transmission de la pression d'injection provoquée par la seconde injection de matière plastique, afin de réduire ainsi la force de blocage nécessaire pour surmonter les forces tendant à séparer la première section de moule (12) de la seconde section de moule (10, 50) du fait de la pression d'injection.

4. Procédé selon la revendication 1, 2 ou 3, dans lequel la première section de moule (12) et la seconde section de moule (10, 50) sont séparées par une ligne de séparation (35, 75),
caractérisé en ce que
l'étape (a) comprend l'étape consistant à :
(e) produire la première injection de matière plastique de façon que la matière plastique de cette première injection (6, 7, 8, 9, 46, 47, 48, 49) ne recouvre pas complètement la ligne de séparation et
l'étape c comprend l'étape consistant à :
(f) produire la seconde injection de matière plastique de façon que la matière plastique de cette seconde injection remplisse la cavité de moule (16, 56) pour recouvrir ainsi complètement la ligne de séparation.

5. Procédé selon la revendication 1, 2 ou 3,
caractérisé en ce que
l'étape (b) comprend les étapes consistant à :
(g) refroidir la première partie de la matière plastique (7, 47) de la première injection de façon qu'elle se solidifie au moins partiellement en moulant cette partie sous une épaisseur de paroi relativement mince (37, 77) ; et
(h) refroidir l'autre partie de la matière plastique (6, 8, 9, 46, 48, 49) de la première injection de façon que cette autre partie de la matière plastique de la première injection reste fluide en moulant cette autre partie sous une épaisseur de paroi relativement épaisse (19, 59).

6. Procédé selon la revendication 1, 2 ou 3,
caractérisé en ce que
la matière plastique (6, 7, 8, 9, 46, 47, 48, 49) de la première injection a la même composition chimique que la matière plastique de la seconde injection.

7. Procédé selon la revendication 1, 2 ou 3,
caractérisé en ce que
la matière plastique (6, 7, 8, 9, 46, 47, 48, 49) de la première injection est injectée dans la cavité de moule (16, 56) par au moins une porte (30, 70), et en ce que la matière plastique de la seconde injection est injectée dans la cavité de moule par la même porte au moins unique.

8. Procédé selon la revendication 1, 2 ou 3,
caractérisé en ce que
une porte unique est utilisée pour créer au moins un chemin d'écoulement de la matière plastique de la seconde injection, afin qu'elle continue de remplir la cavité de moule (16, 56).

9. Procédé selon la revendication 1, 2 ou 3,
caractérisé en ce que
le produit de matière plastique creux moulé par injection comporte des parois stratifiées, et la cavité de moule (56) contient un produit de matière plastique précédemment injecté lorsque la matière plastique de la première et de la seconde injections est injectée, de façon que la première paroi comprenne le produit de matière plastique précédemment injecté.
